(19)

Europäisches
Patentamt
European
Patent Office
Office européen
des brevets

(11) **EP 2 237 578 A2**

(12) **EUROPEAN PATENT APPLICATION**

(43) Date of publication:
**06.10.2010 Bulletin 2010/40**

(51) Int Cl.:
***H04W 4/06*** (2009.01)

(21) Application number: **10159102.2**

(22) Date of filing: **06.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **03.04.2009 KR 20090028753**
**12.05.2009 KR 20090041228**

(71) Applicant: **Electronics and Telecommunications Research Institute**
**Daejeon 305-350 (KR)**

(72) Inventors:
• **Ahn, Jae Young**
**305-761, Daejeon (KR)**
• **Lee, Heesoo**
**305-768, Daejeon (KR)**
• **Noh, Taegyun**
**305-804, Daejeon (KR)**
• **Lee, Kyoung Seok**
**302-120, Daejeon (KR)**

(74) Representative: **Betten & Resch**
**Patentanwälte**
**Theatinerstrasse 8**
**80333 München (DE)**

(54) **Multicast and broadcast data transmssion method**

(57)     A multicast and broadcast data transmission method is provided. The multicast and broadcast data transmission method includes transmitting, at at least one synchronized macrocell base station, Multicast and Broadcast Service (MBS) data to user equipment (UE) using radio resources allocated for MBS data transmission. Here, a relay or a small cell base station in the cell of the at least one synchronized macrocell base station keeps silent for the radio resources used for the macrocell base station to transmit MBS traffic data without performing any transmitting operation. Accordingly, it is possible to increase transmission efficiency while minimizing interference in a UE, and improve the quality of a multicast broadcast service while reducing required radio resources.

FIG. 2

**Description**

CLAIM FOR PRIORITY

This application claims priority to Korean Patent Application Nos. 2009-28753 filed on April 3, 2009 and 2009-41228 filed on May 12, 2009 in the Korean Intellectual Property Office (KIPO), the entire contents of which are hereby incorporated by reference.

BACKGROUND

1. Technical Field

Example embodiments of the present invention relate in general to a multicast and broadcast data transmission method, and more specifically to a method for a base station to transmit common data to terminals in a network in which relays and small cells such as picocells and femtocells coexist with macrocells, and a method for a base station to transmit common data to a plurality of relays.

2. Related Art

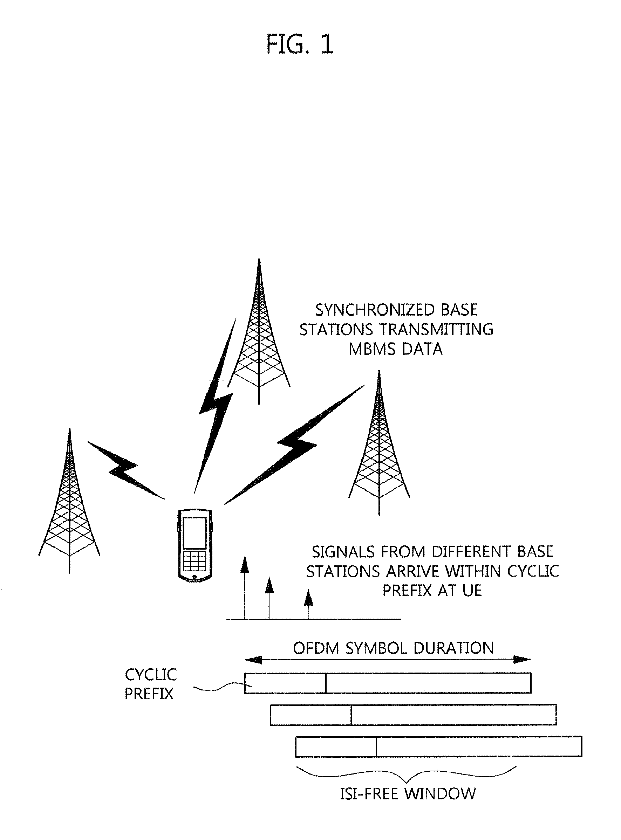

A service of broadcasting or multicasting the same data to one cell or a plurality of cells is referred to as a Multimedia Broadcast Multicast Service (MBMS) or Multicast and Broadcast Service (MBS). Among technologies supporting an MBMS, a technology for transmitting the same signals that are synchronized with each other from a plurality of cells during a predetermined time period is referred to as Multicast Broadcast Single Frequency Network (MBSFN).
When MBSFN is applied, mobile communication nodes (or cells) in a predetermined area simultaneously transmit multicast broadcast traffic or control data using the same radio resources. An MBSFN area in which MBSFN transmission is carried out consists of at least one cell. Also, at least one MBSFN area is included in an MBSFN synchronization area, and enables synchronized transmission in the physical layer. A Long Term Evolution (LTE) system of the Third Generation Partnership Project (3GPP), Institute of Electrical and Electronics Engineers (IEEE) 802.16m, etc. support MBSFN transmission for an MBMS.
MBSFN operation will now be described in detail with reference to FIG. 1. FIG. 1 illustrates an Intersymbol Interference (ISI)-free operation in general MBSFN transmission.
In MBSFN operation, MBMS data is wirelessly transmitted from tightly synchronized cells at the same time. Thus, the receiver of a terminal should observe several versions of a signal having several delay values due to multi-cell transmission. As illustrated in FIG. 1, when MBMS transmissions of several base stations are synchronized sufficiently tightly with each other, time points at which pieces of data transmitted by the several base stations arrive at a terminal are within a range from the beginning of a symbol to the end of a cyclic prefix, and ISI does not occur. As a result, the terminal takes the MBSFN transmissions as transmission from one large cell, and the receiver of the terminal processes the MBSFN transmissions, which is actually multi-cell transmission, as if the receiver receives and processes several pieces of data transmitted through multiple paths in one cell. Then, the terminal does not even need to know how many base stations transmit MBMS signals.
Such MBSFN transmission makes a great improvement in Signal-to-Interference-plus-Noise Ratio (SINR). In particular, at a cell edge, several transmissions which would otherwise have constituted inter-cell interference are translated into useful signal energy. Thus, the power of a received signal increases, and the power of an interference signal is remarkably reduced.
When a relay is in an MBSFN area in which data is transmitted by such MBSFN operation, a problem may occur. When the relay in the MBSFN area transmits unicast traffic, etc. using radio resources for MBSFN signal transmission during an MBSFN transmission time, terminals around the node cannot receive multicast/broadcast service. Also, the terminals may not receive unicast service due to interference from other nodes.
Accordingly, it is preferable that all relays and small cells in an MBSFN area transmit the same MBSFN signals in synchronization with neighboring cells if possible. However, when this is not possible due to prevention of a waste of radio resources or limiting of wired backhaul link performance, a method for minimizing influence on receiving performance of terminals, etc. should be devised.
Also, when a relay transmits synchronized MBSFN signals, MBSFN traffic/control data should be transferred to a plurality of relays connected with the base station of the corresponding cell before transmission of the signal, and thus an efficient MBSFN data transfer method is needed.

**EP 2 237 578 A2**

SUMMARY

Accordingly, example embodiments of the present invention are provided to substantially obviate one or more problems due to limitations and disadvantages of the related art.

Example embodiments of the present invention provide a method for a base station or network to transmit multicast broadcast data to UEs without transmitting the multicast broadcast data to a relay or small cell, and a method for a base station to efficiently transmit multicast broadcast data to relays.

In some example embodiments, a method of transmitting multicast broadcast service (MBS) data in a wireless network in which a macrocell, a small cell, and a relay coexist includes transmitting, at at least one synchronized macrocell base station, MBS data to user equipment (UE) using radio resources allocated for MBS data transmission. Here, a relay or a small cell base station in a cell of the at least one synchronized macrocell base station keeps silent for the radio resources used for the macrocell base station to transmit MBS traffic data without performing any transmitting operation.

The MBS data may be Multicast Broadcast Single Frequency Network(MBSFN) data.

The small cell base station may be a femtocell base station or a picocell base station.

The relay may receive information about for which radio resources the relay keeps silent through the macrocell base station.

The small cell base station may receive information about for which radio resources the small cell base station keeps silent through the network.

When the relay has a self-interference cancellation function, in a method other than the above-described method, the relay may amplify the MBS data received from the base station and simply forwards the amplified MBS data to the UE.

The relay or the small cell base station may transmit all or a part of MBS control data for the UE to receive the MBS data.

In other example embodiments, a relay device is located in a cell of at least one synchronized macrocell base station, receives information about radio resources allocated for the at least one synchronized macrocell base station to transmit MBS data through the base station, and keeps silent without performing any transmitting operation using the radio resources allocated for the macrocell base station to transmit MBS traffic data.

In still other example embodiments, a small cell base station is located in a cell of at least one synchronized macrocell base station, receives information about radio resources allocated for the at least one synchronized macrocell base station to transmit MBS data from a network, and keeps silent without performing any transmitting operation using the radio resources allocated for the macrocell base station to transmit MBS traffic data.

In yet other example embodiments, a base station transmits MBS data to a UE in synchronization with at least one another base station, includes at least one relay in a cell of the base station itself, receives information about radio resources allocated for MBS traffic data transmission of a base station or information instructing to keep silent for the radio resources allocated for MBS traffic data transmission of the base station without a transmitting operation from a network, and transfers the received information to the at least one relay.

In yet other example embodiments, a multicast broadcast data transmission method includes: transmitting, at a base station, MBS data to at least one relay located in a cell of the base station over a backhaul link before the base station transmits the MBS data to a UE; and transmitting, at the at least one relay receiving the MBS data over the backhaul link, the received MBS data in synchronization with MBS data transmission from the base station to the UE.

The transmitting, at a base station, MBS data to at least one relay located in a cell of the base station over a backhaul link may include broadcasting, at the base station, the MBS data to all relays to which the base station transmit the MBS data.

The transmitting, at a base station, MBS data to at least one relay located in a cell of the base station over a backhaul link may include grouping relays into at least one multicast group, and multicasting the MBS data to each multicast group.

The multicast broadcast data transmission method may further include, when a notification of failure in receiving the MBS data transmitted by the base station is received from the relay or a notification of success in receiving the MBS data is not received from the relay, retransmitting, at the base station, the MBS data failed to be received. Here, the retransmission may be performed by broadcast or unicast.

When the relay fails to receive the MBS data although the retransmission is performed a predetermined number of times or more or does not receive all or a part of the MBS data before an MBS signal transmission time of the relay, the relay may keep silent for radio resources for transmitting the MBS data failed to be received without performing any transmitting operation.

A pilot for a channel through which the MBS data is broadcast or multicast may be precoded on the basis of a precoding matrix for data transmission.

A pilot for a channel through which the MBS data is broadcast or multicast may not be precoded, or may be

3

precoded regardless of a precoding matrix for data transmission.

The broadcast or multicast MBS data may be precoded using a covariance matrix maximizing a channel capacity of a relay having the smallest channel capacity.

The transmitting, at a base station, MBS data to at least one relay located in a cell of the base station over a backhaul link may include transmitting in a unicast way, at the base station, the MBS data to each relay.

The transmitting, at a base station, MBS data to at least one relay located in a cell of the base station over a backhaul link may include, when a number of relays to which the base station transmits the MBS data exceeds a predetermined threshold value, broadcasting the MBS data to all the relays to which the MBS data is transmitted, and when the number of relays to which the base station transmits the MBS data is the predetermined threshold value or less, unicasting the MBS data to each relay.

The multicast broadcast data transmission method may further include transmitting control information for resource allocation of the wireless backhaul link related to the MBS data transmission using at least one of a part of radio resources allocated to the backhaul link and a control channel for a macro UE.

The multicast broadcast data transmission method may further include receiving, at the relay, control information for resource allocation related to the MBS data transmission. Here, when the relay does not have a self-interference cancellation function, the control information may be received through a part of radio resources allocated to the backhaul link, and when the relay has the self-interference cancellation function, the control information may be received through at least one of a part of the radio resources allocated to the backhaul link and a control channel for a macro UE.

In yet other example embodiments, a multicast broadcast data transmission apparatus transmits MBS data to at least one relay over a backhaul link before transmitting the MBS data to a UE.

In yet other example embodiments, a relay device receives MBS data transmitted from the base station over a backhaul link before a base station transmits the MBS data to a UE, and transmits the MBS data received over the backhaul link to the UE in synchronization with a time point at which the base station transmits the MBS data to the UE.

BRIEF DESCRIPTION OF DRAWINGS

Example embodiments of the present invention will become more apparent by describing in detail example embodiments of the present invention with reference to the accompanying drawings, in which:

FIG. 1 illustrates an Intersymbol Interference (ISI)-free operation in general Multicast Broadcast Single Frequency Network (MBSFN) transmission;

FIG. 2 illustrates a system to which an example embodiment of the present invention is applied;

FIG. 3 is a block diagram of a Multimedia Broadcast Multicast Service (MBMS) architecture to which an example embodiment of the present invention is applied;

FIG. 4 shows downlink frame structures of a base station and a relay for a relay having no self-interference cancellation function;

FIG. 5 illustrates a method of broadcasting MBSFN data to a relay according to an example embodiment of the present invention;

FIG. 6 illustrates a method of unicasting MBSFN data to a relay according to an example embodiment of the present invention; and

FIG. 7 shows downlink frame structures for a case where a broadcast multicast service method according to an example embodiment of the present invention is applied to a relay having a self-interference cancellation function.

DESCRIPTION OF EXAMPLE EMBODIMENTS OF THE PRESENT INVENTION

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*i.e.*, "between" versus "directly between", "adjacent" versus "directly adjacent", etc.).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It should also be noted that in some alternative implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

In this specification, the term "User Equipment (UE)" may be referred to as a mobile station, User Terminal (UT), wireless terminal, Access Terminal (AT), terminal, subscriber unit, Subscriber Station (SS), wireless device, wireless communication device, Wireless Transmit/Receive Unit (WTRU), moving node, mobile, or other terms. Various example embodiments of a UE may include a cellular phone, a smart phone having a wireless communication function, a Personal Digital Assistant (PDA) having a wireless communication function, a wireless modem, a portable computer having a wireless communication function, a photographing apparatus such as a digital camera having a wireless communication function, a gaming apparatus having a wireless communication function, a music storing and playing appliance, an Internet home appliance capable of wireless Internet access and browsing, and also portable units or terminals having a combination of such functions, but are not limited to these.

Also, the term "base station" may be referred to as Node-B, eNode-B, Base Transceiver System (BTS), access point, and other terms.

Example embodiments of the present invention provide a method of efficiently transmitting common data to two or more terminals via a relay (a femtocell base station or a picocell base station), and a method of efficiently transmitting common data to relays. The typical example of such common data is multicast or broadcast data such as Multicast Broadcast Single Frequency Network (MBSFN) data, and thus example embodiments related to transmission of MBSFN data will be mainly described. However, it should be noted that the scope of the present invention is not limited to MBSFN data only.

In this specification, service for transmitting common data to two or more terminals, that is, a multicast or broadcast service is abbreviated to a Multicast Broadcast Service (MBS), and data transmitted through an MBS will be referred to as MBS data.

Hereinafter, the two methods will be described in detail with reference to example embodiments.

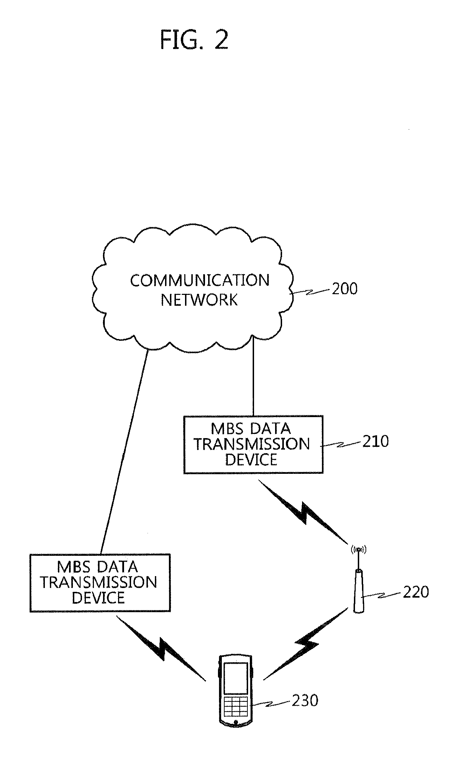

FIG. 2 illustrates a system to which an example embodiment of the present invention is applied.

The system to which an example embodiment of the present invention is applied includes a communication network 200, an MBS data transmission device 210, a relay 220, and at least one UE 230.

An example embodiment of the MBS data transmission device 210 according to the present invention is a base station. MBS data transmission methods according to example embodiments of the present invention can be briefly classified into an MBS data transmission method for a case where MBS data is not transmitted via the relay 220, and an MBS data transmission method for a case where MBS data transmission is also performed via the relay 220 in synchronization with a base station.

In the transmission method for the case where MBS data is not transmitted via the relay 220, the MBS data transmission device 210 receives information related to radio resources allocated for MBS data transmission of the base station or information instructing to keep silent for radio resources allocated for MBS data transmission without a transmitting operation from the communication network 200, and transfers the received information to the relay 220. The relay 220 receiving the information keeps silent for the radio resources allocated for MBS data transmission without performing any transmitting operation.

In this case, that is, in the transmission method for the case where MBS data is not transmitted via a relay, the relay 220 of FIG. 2 can be replaced with a femtocell base station, a picocell base station, etc. When a femtocell base station or a picocell base station replaces the relay 220, the relay 220 of FIG. 2 is wire-connected with the communication network 200 including a Core Network (CN) while wirelessly connected with the MBS data transmission device (or base station) 210.

Meanwhile, in the transmission method for the case where MBS data is transmitted via a relay, the MBS data transmission device 210 transmits MBS data to the relay 220 before transmitting the MBS data to the UE 230. The relay 220 receiving the MBS data transmits the MBS data to the UE 230 in synchronization with a time point at which the MBS data transmission device 210 transmits the MBS data to the UE 230.

Each of the methods will be described below in further detail.

First, operation of a relay for a case where a base station does not transfer MBS data to the relay will be described in detail. As mentioned above, description will be made using MBSFN data (MBSFN traffic data and control data) as an example of MBS data.

A base station transmits and receives MBSFN data over a backhaul link between the base station and a relay, that is, a wireless backhaul link to transfer MBSFN traffic data and control data (will be referred to as MBSFN data) to the relay, and to this end, radio resources need to be allocated. With this taken into consideration, the base station may not transfer the MBSFN data to all or a part of relays.

A first method applicable to this case is a synchronized silencing scheme, in which the relay does not transmit any signal using radio resources for MBSFN transmission while the base station transmits an MBSFN signal. Using the synchronized silencing method according to an example embodiment of the present invention, it is possible to prevent a relay from interfering with terminals that want to receive an MBSFN signal.

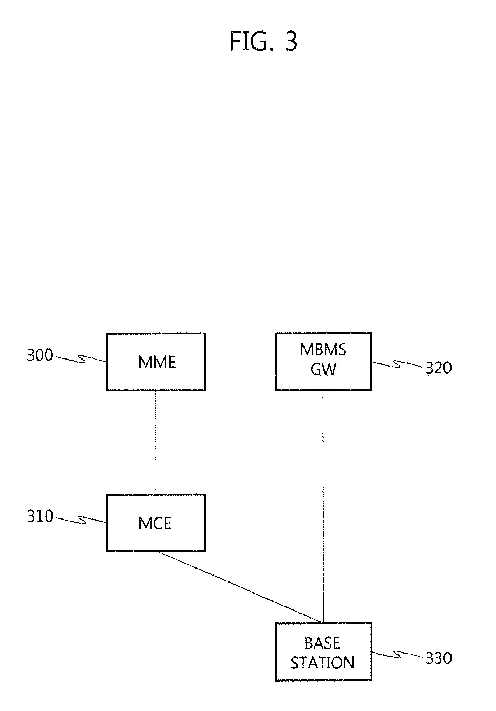

FIG. 3 is a block diagram of a Multimedia Broadcast Multicast Service (MBMS) architecture to which an example embodiment of the present invention is applied.

As shown in FIG. 3, the MBMS architecture to which an example embodiment of the present invention can be applied may include a Mobility Management Entity (MME) 300, an MBMS Coordination Entity (MCE) 310, an MBMS gateway (GW) 320, and a base station 330.

The MME 300 is a control node for processing signaling between a UE and a CN. Main functions of the MME 300 include bearer management-related functions and connection management-related functions.

The MCE 310 performs allocation of radio resources that are used for multi-cell MBMS transmission based on admission control and MBSFN operation by all base stations in an MBSFN area. When there are not enough radio resources for the corresponding MBMS, the MCE 310 determines not to set a radio bearer of a new MBMS. To be specific, details of radio configuration, for example, modulation and coding methods as well as time/frequency radio resource allocation are determined. The MCE 310 is involved in MBMS session control signaling, and may function as a part of another network element instead of existing as a separate element as shown in FIG. 3.

The MBMS GW 320 transmits or broadcasts an MBMS packet to each base station to which service will be provided. Like the MCE 310, the MBMS GW 320 may also function as a part of another network element.

When the synchronized silencing scheme is used, the MCE 310 or the MBMS GW 320 determines for which radio resources a relay keeps silent, and signals the determination result to at least one relay via the base station 330. In other words, the MCE 310 or the MBMS GW 320 notifies which radio resources an MBSFN service is provided through to a relay.

In general, MBSFN data is transmitted by a Single Frequency Network (SFN) operation from all adjacent cells. Thus, even if a relay does not transmit the MBSFN data, the received Signal-to-Interference-plus-Noise Ratio (SINR) of the MBSFN data may be good. However, all or a part of control information for the MBSFN service may not be transmitted by the SFN operation, and thus some users in a relay cell may not correctly receive the control information. For these users, the relay transmits the minimum control information for users in the relay cell to receive MBSFN data even if the relay actually keeps silent without transmitting the MBSFN data.

The synchronized silencing scheme according to an example embodiment of the present invention can be applied not only to a relay but also to a femtocell base station that has a much smaller cell radius than a macrocell and an indoor or outdoor picocell base station (used in a hotzone cell) having poor wired backhaul link quality. In such a small cell, the minimum control information required for users in the small cell to receive MBSFN data is also transmitted. In other words, the synchronized silencing scheme according to an example embodiment of the present invention can be applied to small cells such as a relay, a femtocell, and a picocell, and in this case. In this case, a general base station may be referred to as a macrocell base station.

Meanwhile, when a relay has a self-interference cancellation function, a more efficient MBS can be provided using a relay mode switching method according to an example embodiment of the present invention other than the above-described method.

To be specific, the relay employing a synchronized relay mode switching method switches an operation mode of the relay itself to perform a relay function during a transmission time for a unicast signal and a simple wireless relay (repeater) function during a transmission time for an MBSFN signal, so that a method of wirelessly relaying the MBSFN signal from a base station can be applied. Here, relay mode switching is conducted between a layer 2/layer 3 (L2/L3) relaying function for unicast signal transmission and a function of a repeater having the self-interference cancellation function for MBSFN signal transmission. Thus, when MBSFN traffic/control data alone is transmitted using one whole carrier, the relay continuously operates as a repeater having the self-interference cancellation function.

Thus far, the MBS data transmission method for the case where a base station does not transmit MBS data to a relay or a network does not transmit MBS data to a small cell base station such as a femtocell or a picocell has been described.

Next, the MBS data transmission method for the case where a relay transmits synchronized MBS data will be described.

Likewise, description will be made using MBSFN data as an example of MBS data. In other words, methods of transferring MBSFN data to a relay that will be described below can be applied to data transferred in common to all or a part of relays as well as MBSFN data.

In spite of a drawback that additional radio resources for transferring MBSFN data from a base station to a relay are required for the relay to transmit the MBSFN data, a method for the relay to transmit an MBSFN signal in synchronization with the base station in order to improve MBSFN receiving performance and extend the coverage, that is, a synchronized MBSFN signal transmission method can be applied. In this case, a Hybrid Automatic Repeat ReQuest (HARQ) scheme may be applied according to the type of data to be transferred, or the data may be transmitted only once.

As the most common case, a method for a relay having no self-interference cancellation function to transmit synchronized MBSFN signals according to an example embodiment of the present invention will be described first.

In general, a relay includes two transceivers. One of the transceivers is used for transmission and reception between the relay and a base station, and the other is used for transmission and reception between the relay and terminals connected to the relay. A signal transmitted by one of the transceivers of a relay having no self-interference cancellation function is input to the receiver of the other transceiver and causes severe interference (magnetic interference). Accordingly, assuming that the relay uses the same radio resources for transmission and reception, the relay cannot simultaneously receive a downlink signal from the base station and transmit the downlink signal to a terminal. To receive a signal from the base station, the relay may perform no transmission to terminals during the corresponding time section, that is, a time section in which the relay receives a downlink signal from the base station.

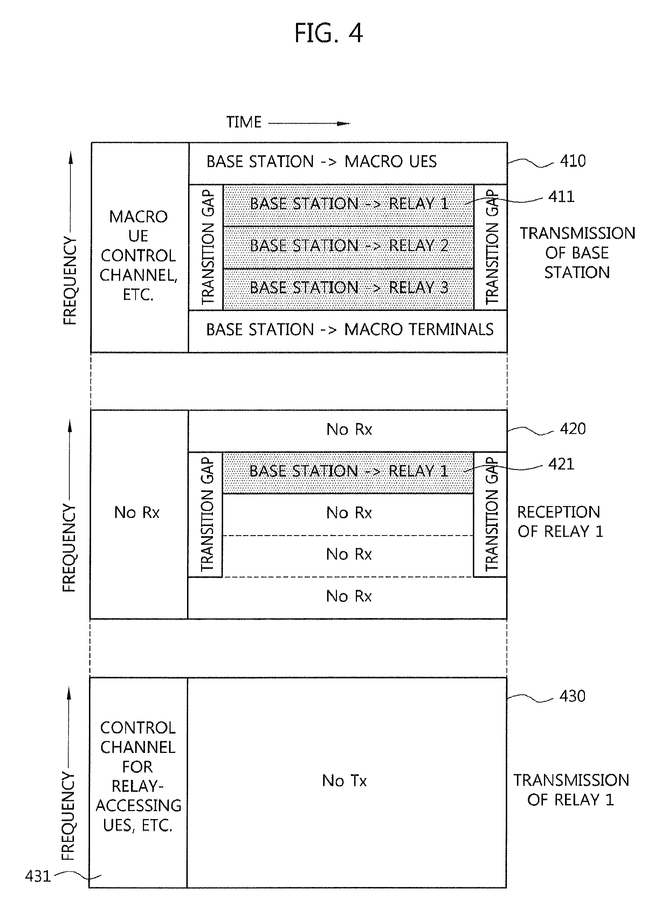

FIG. 4 shows downlink frame structures of a base station and a relay to which an example embodiment of the present invention is applied.

In the example embodiment illustrated in FIG. 4, it is assumed that a relay has no self-interference cancellation function. The upper downlink frame of FIG. 4 shows a frame structure related to downlink transmission of a base station, the middle frame shows a frame structure for a receiver among downlink frame structures of relay 1, and the lower frame shows a frame structure for a transmitter among downlink frame structures of relay 1.

As illustrated in FIG. 4, a base station can transmit a signal to a relay and a macro UE (a UE accessing a base station) using the same sub-frame, and the relay can receive only a radio resource part for a wireless backhaul downlink in a sub-frame corresponding to the relay itself. For example, in the structure of a frame 420 disposed in the middle of FIG. 4, relay 1 receives data transmitted from a base station only in a part 421 corresponding to a corresponding part 411 of the downlink frame transmitted from the base station to relay 1. Relay 1 does not perform any receiving operation in a part in which the base station transmits data to a macro UE or another relay.

Referring to the structure of a downlink transmission frame 430 of relay 1 disposed in the lower portion of FIG. 4, relay 1 does not perform any transmission operation in the part 421 in which relay 1 performs a receiving operation. Also, relay 1 is transmitting a control channel 431 for UEs accessing relay 1 itself, and thus cannot receive a control channel transmitted for a macro UE from the base station. Accordingly, control information for backhaul link resource allocation between the base station and the relay is also transmitted using a part of radio resources allocated for a backhaul downlink.

As described above, a backhaul downlink between a base station and a relay is used for transmission of unicast data transmitted to each relay and also common data that needs to be transferred to all relays connected to the donor base station, such as MBSFN data. To apply the synchronized MBSFN signal transmission method according to an example embodiment of the present invention, the donor base station transfers the corresponding MBSFN data to relays before an MBSFN signal transmission time of the relay.

In a first method for transferring MBSFN data to a relay, a donor base station broadcasts the MBSFN data to all relays. MBSFN data is broadcast to all relays connected to a donor base station using a part of backhaul downlink radio resources so that required radio resources can be reduced.

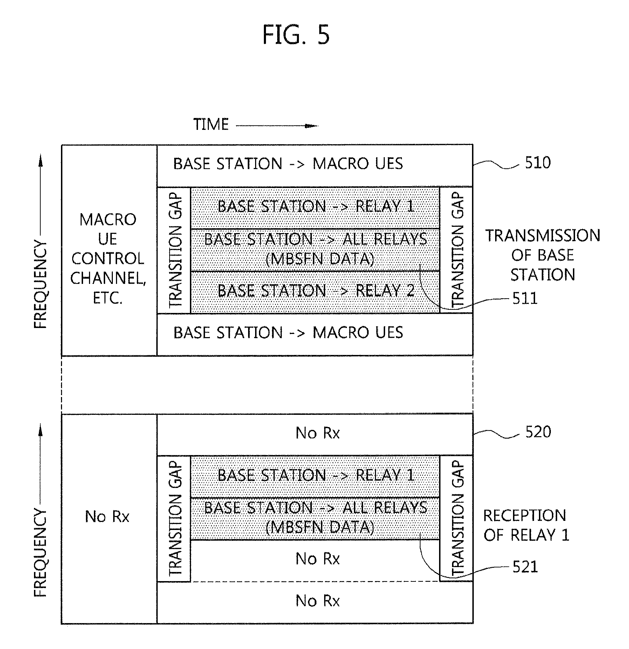

FIG. 5 illustrates a method of broadcasting MBSFN data to a relay according to an example embodiment of the present invention. Here, the MBSFN data may consist of a plurality of transport blocks.

In FIG. 5, an upper frame 510 shows a downlink frame structure of a base station, and a lower frame 520 shows a frame structure for a receiver among downlink frames of relay 1.

Assuming that a relay does not have the self-interference cancellation function, the relay cannot simultaneously perform transmission and reception. Thus, a transition gap for the relay to switch between transmission and reception is needed, like in the example embodiment of FIG. 4.

The base station broadcasts MBSFN data to all relays through allocated resources 511. Each relay also receives the MBSFN data from the base station using allocated resources 521, and transmits the MBSFN data in a predetermined transmission mode in synchronization with the MBSFN transmission time section of the base station.

At this time, a relay that fails to receive the MBSFN data may use the HARQ scheme or a retransmission cut-off scheme.

First, a case where the HARQ scheme is used will be described. When the base station transmits the MBSFN data, all or a part of the relays transmit ACK/NACK signals to the base station. When an NACK signal is included in signals received by the base station, the base station may re-broadcast the MBSFN data or re-unicast the MBSFN data to a relay that has transmitted the NACK signal. Also, for a relay that cannot receive the MBSFN data even when retransmission is performed a predetermined number of times or more or cannot receive all or a part of the MBSFN data before an MBSFN signal transmission time, the above-described synchronized silencing scheme may be applied to all or the part of the MBSFN data. When the scheme is applied, no retransmission may be performed.

Next, in the retransmission cut-off scheme, MBSFN data broadcast to a relay is allowed only once, and retransmission is not performed. For a relay that fails to receive all or a part of the MBSFN data, the synchronized silencing scheme is applied to all or the part of the MBSFN data.

As in the above-described example embodiment of FIG. 5, when the same data (e.g., MBSFN data) is broadcast to all relays, the relays feed back information about channel states between a base station and the relays to the base station for efficient transmission and reception. Such channel state information includes a precoding matrix or vector, a rank or the number of layers, channel quality, and so on.

The base station selects an optimum transmission method on the basis of the channel state information fed back from the relays and transmits the data to the relays. The transmission method includes a rank (or the number of layers), the precoding matrix (or vector), a modulation and coding scheme (MCS) level, and so on.

First, the base station selects a precoding matrix to provide a receive SINR of an appropriate level or more to all or a part of the relays. A method for a base station to select a precoding matrix according to an example embodiment of the present invention will be described below.

It is assumed that a transmitting antenna of a base station is indicated by $N_t$, the number of receiving antennas of relay j is indicated by $Nr_j$, and a Multiple Input Multiple Output (MIMO) channel between the base station and relay j is indicated by $H_j$. When a covariance matrix of a transmission signal is Q, the channel capacity of relay j is given by Equation 1 below.

[Equation 1]

$$C_j = \log_2 \det\left(I_{Nr_j} + H_j Q H_j^*\right)$$

Since the base station transmits the same data to all relays, the data may be transmitted using a covariance matrix that maximizes the channel capacity of a relay having the smallest channel capacity. In other words, the base station calculates a covariance matrix that maximizes the channel capacity of a relay having the smallest channel capacity using Equation 2 below.

[Equation 2]

$$\max_{Q:Tr(Q)=P} \min_j \log_2 \det\left(I_{Nr_j} + H_j Q H_j^*\right)$$

However, this method may be applied to a part of relays that have channel capacities of a predetermined level or more to improve the efficiency of radio resources. In this case, a part of relays may not receive a receive SINR of the appropriate level or more.

The method of selecting a covariance matrix using Equation 2 is suggested as an example, and example embodiments of the present invention do not exclude use of other methods for calculating the covariance matrix of a base station transmission signal.

When a covariance matrix is calculated using the above-described method, it is possible to obtain an appropriate precoding matrix for application to the base station using a relational expression between the covariance matrix and the precoding matrix according to an example embodiment of the present invention.

Meanwhile, a pilot transmission method for a broadcast channel may be performed in the following two ways:

- a pilot is precoded on the basis of a precoding matrix (or vector) used for data transmission and transmitted
- a pilot is transmitted without precoding or after precoding unrelated to the precoding matrix (or vector) used for data transmission.

In the first pilot transmission method, there is a separate pilot for each layer. Since the structure of a transmitted pilot varies according to the number of transmitted layers (or rank), the base station needs to inform the number of layers (or rank) to a relay so that the relay can correctly interpret the pilot. Also, the base station needs to inform an MCS level, etc. to the relay so that the relay can correctly receive the corresponding broadcast channel.

In the second pilot transmission method, that is, when a pilot is transmitted without precoding or after precoding unrelated to the precoding matrix (or vector) used for data transmission, the base station informs the number of transmitted layers (or rank), the precoding matrix (or vector), an MCS level, etc. to a relay so that the relay can correctly receive the corresponding broadcast channel.

In a second method for transferring MBSFN data to a relay according to an example embodiment of the present invention, the MBSFN data is unicast to each relay.

This method applies a beamforming scheme, a precoding scheme, etc. to the backhaul link of a relay to increase the transmission capacity, and thus can provide a higher transmission rate than the broadcast method in which the MBSFN data is transmitted to all relays. Accordingly, the unicast method may be relatively more efficient when there are a number of relays, and the like.

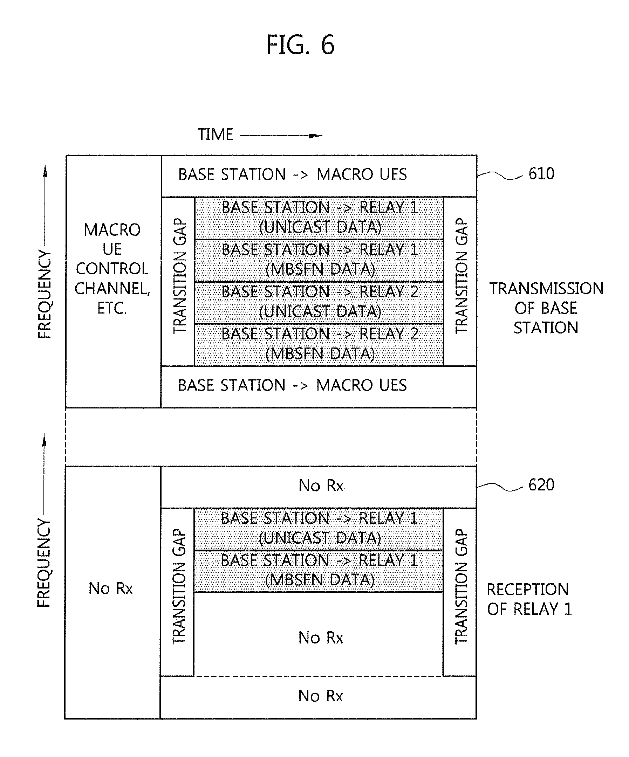

FIG. 6 illustrates a method of unicasting MBSFN data to a relay according to an example embodiment of the present invention.

An upper frame 610 of FIG. 6 is related to downlink transmission of a base station, and a lower frame 620 shows a frame structure for a receiver among downlink frame structures of relay 1.

As seen from FIG. 6, a base station unicasts the same MBSFN data to relay 1 and relay 2. Also, each relay receives the data in a section for data that the base station transmits to the relay itself, and does not receive data in another section.

In this case, the unicast data and the MBSFN data transmitted to the relays may be bound in one transport block, or separate transport blocks, respectively. When the unicast data and the MBSFN data are made into one transport block, the same HARQ process may be applied to the MBSFN data as well as the unicast data.

When the MBSFN data is made into a separate transport block from the general unicast data, one of the following retransmission methods can be applied to the MBSFN data:

- a separate HARQ process for the MBSFN data is performed, and for a relay that cannot receive all or a part of the MBSFN data even when retransmission is performed a predetermined number of times or more or before an MBSFN signal transmission time, the synchronized silencing scheme is applied to all or the part of the MBSFN data.
- MBSFN data unicast to a relay is allowed only once, and for a relay that fails to receive all or a part of the MBSFN data, the synchronized silencing scheme is applied to all or the part of the MBSFN data.

In a third method for transferring MBSFN data to a relay according to an example embodiment of the present invention, the two methods are appropriately switched and applied according to the number of relays, change in environment, and so on. For example, the unicast method may be applied when the number of relays is a predetermined value or less, and the broadcast method may be applied when the number of relays exceeds the predetermined value.

In a fourth method for transferring MBSFN data to a relay according to an example embodiment of the present invention, relays are classified into a plurality of multicast groups, and the MBSFN data is multicast to each group so that the radio resources of a backhaul downlink can be efficiently used.

A base station sets the relay multicast groups on the basis of channel state information fed back from the relays. A grouping method, the number of groups, etc. may be adaptively changed according to an environment. A method of transferring MBSFN data to each multicast group after relays are classified into a plurality of multicast groups is the same as the broadcast method in which MBSFN data is broadcast to relays according to an example embodiment of the present invention.

A method that is the same as the above-described broadcast method can be applied to a relay that fails to receive MBSFN data. This method becomes similar to (or the same as) the broadcast method when all relays are classified into one group, and becomes similar to (or the same as) the unicast method when only one relay is set for one group. This method can also be applied when common data is transferred to relays of a specific group only.

Meanwhile, to transfer data to a relay according to the synchronized MBSFN data transmission method for relays described with reference to FIGS. 5 and 6, control information for allocation of resources related to the data transmission needs to be transferred to the relay. To this end, one of the following signaling methods can be employed:

- Semi-static signaling: this is an upper layer signaling in which resources of the same size are allocated for MBSFN data transmission for a predetermined time (e.g., several ten/hundred ms, or several seconds or more), and a transmission method, etc. are not changed.
- Dynamic signaling: control information is transferred for each sub-frame or some sub-frames, and radio resource allocation, a transmission method, etc. for MBSFN data transmission are dynamically changed. For such signaling, a common relay control channel that all relays receive may be established, a separate relay control channel may be established for each relay, or the control information may be multiplexed together with traffic data for each relay and transferred. All control channels for dynamic signaling are established using radio resources that the relays can receive.
- A method combining semi-static signaling and dynamic signaling: MBSFN data transmission-related control information that is not changed for a relatively long time is transferred by dynamic signaling, and control information that needs to be dynamically changed is transferred by dynamic signaling.

An example of a case where a broadcast multicast service method according to an example embodiment of the present invention is employed in a relay having the self-interference cancellation function will be described below.

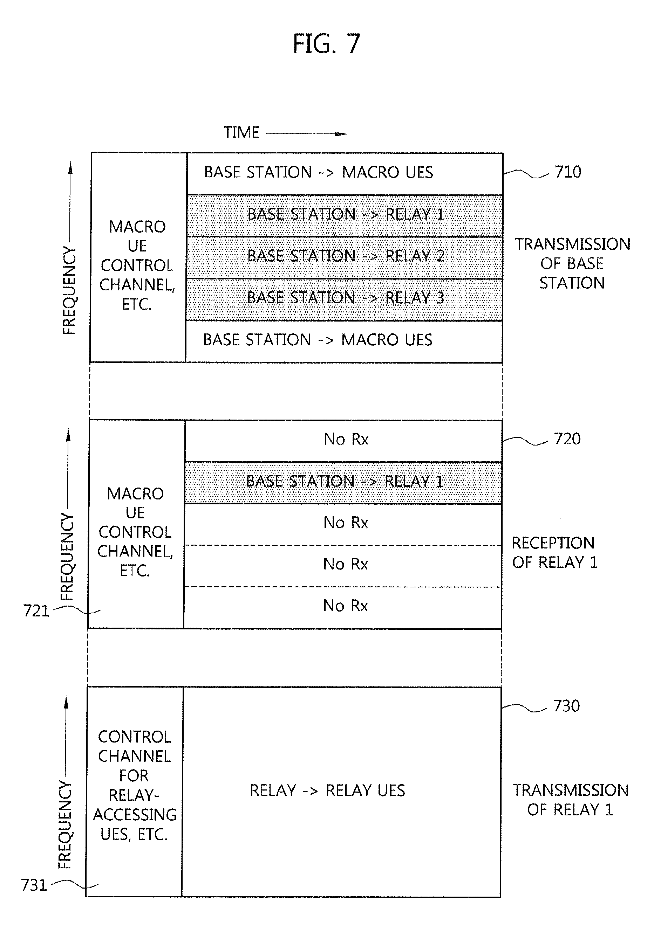

FIG. 7 shows downlink frames structures for a case where a broadcast multicast service method according to an example embodiment of the present invention is applied to a relay having the self-interference cancellation function.
An upper downlink frame 710 of FIG. 7 shows a frame structure related to downlink transmission of a base station, a middle frame 720 shows a frame structure for a receiver among downlink frame structures of relay 1, and a lower frame 730 shows a frame structure for a transmitter for UEs among downlink frame structures of relay 1.
Referring to FIG. 7, a relay having the self-interference cancellation function can simultaneously perform downlink transmission 731 for UEs connected to the corresponding relay and reception 721 of all downlink radio resources, like a macro UE.
Meanwhile, when all relays connected to one donor cell have the self-interference cancellation function, a method for transferring MBSFN data to the relays is basically the same as the four methods for relays having no self-interference cancellation function described with reference to FIGS. 5 and 6. As can be seen from FIG. 7, the method is different from the four methods in that relays can receive control information related to multicast broadcast data transmission to the relays through the same control channel as a macro UE, a guard time for switching between transmission and reception is not needed, and so on.
On the other hand, when MBSFN data is broadcast or multicast using backhaul downlink radio resources for relays having no self-interference cancellation function in a donor cell in which the relays having no self-interference cancellation function coexist with relays having the self-interference cancellation function, the relays having the self-interference cancellation function can also receive the broadcast or multicast MBSFN data, so that required radio resources can be reduced. Here, relays wanting to receive the multicast MBSFN data need to belong to the corresponding multicast group. Also, the relays having the self-interference cancellation function may receive control information for resource allocation related to MBSFN data transmission, etc. through a control channel for the relays having no self-interference cancellation function or the same control channel as the macro UE. In the latter case, the same information is transferred through two control channels.
To transfer MBSFN data to a relay having the self-interference cancellation function, control information for resource allocation related to the transmission needs to be transferred to the relay. For this purpose, the following methods can be used:

- Semi-static signaling: this is an upper layer signaling in which resources of the same size are allocated for MBSFN data transmission for a predetermined time (e.g., several ten/hundred ms, or several seconds or more), and a transmission method, etc. are not changed.
- Dynamic signaling: this is a layer 1/layer 2 (L1/L2) signaling in which control information is transferred for each sub-frame or some sub-frames, and radio resource allocation, a transmission method, etc. for MBSFN data transmission are dynamically changed. A relay having the self-interference cancellation function can be regarded as one particular UE, and thus such a signaling is performed through a control channel for a macro UE.
- A method combining semi-static signaling and dynamic signaling: MBSFN data transmission-related control information that is not changed for a relatively long time is transferred by dynamic signaling, and control information that needs to be dynamically changed is transferred by dynamic signaling.

In the above-described method according to an example embodiment of the present invention, when MBSFN data is not transmitted to a relay or small cell in an MBSFN area due to prevention of a waste of radio resources or limiting of wired backhaul link performance, the relay or small cell keeps silent in synchronization with MBSFN signal transmission from a base station, or the relay switches to a simple wireless relay mode in synchronization with the MBSFN signal transmission. Accordingly, it is possible to increase transmission efficiency while minimizing influence on the MBSFN signal receiving performance of UEs, and so on.

Also, MBSFN traffic/control data at a relay is efficiently transmitted to a plurality of relays connected to a base station, and the relays transmit synchronized MBSFN signals. Accordingly, it is possible to save radio resources and improve the quality of an MBSFN service.

While the example embodiments of the present invention and their advantages have been described in detail, it should be understood that various changes, substitutions and alterations may be made herein without departing from the scope of the invention.

**Claims**

1. A method of transmitting Multicast and Broadcast Service (MBS) data in a wireless network in which macrocells, small cells, and relays coexist, comprising:

   transmitting, at at least one synchronized macrocell base station, MBS data to a User Equipment(UE) using radio resources allocated for MBS data transmission,

   wherein the relay or the small cell base station in a cell of the at least one synchronized macrocell base station keeps silent without performing any transmitting operation for the radio resources used for the macrocell base station to transmit MBS traffic data.

2. The method of claim 1, wherein the MBS data is Multicast Broadcast Single Frequency Network (MBSFN) data.

3. The method of claim 1 or 2, wherein the small cell base station is a femtocell base station or a picocell base station.

4. The method of claim 1,2, or 3, wherein the relay receives information about for which radio resources the relay keeps silent through the macrocell base station.

5. The method of one of claims 1 to 4, wherein the small cell base station receives information about for which radio resources the small cell base station keeps silent through the network.

6. The method of one of claims 1 to 5, wherein when the relay has a self-interference cancellation function, the relay amplifies the MBS data received from the base station and simply forwards the amplified MBS data to the UE.

7. A method of transmitting Multicast and Broadcast Service (MBS) data, comprising:

   transmitting, at a base station, MBS data to at least one relay located in a cell of the base station over a backhaul link before the base station transmits the MBS data to a User Equipment(UE); and
   transmitting, at the at least one relay receiving the MBS data over the backhaul link, the received MBS data to the UE in synchronization with the MBS data transmission from the base station.

8. The method of claim 7, wherein the MBS data is Multicast Broadcast Single Frequency Network (MBSFN) data.

9. The method of claim 7 or 8, wherein transmitting, at a base station, MBS data to at least one relay located in a cell of the base station over a backhaul link includes broadcasting, at the base station, the MBS data to all relays to which the base station transmits the MBS data.

10. The method of claim 7, 8, or 9, wherein transmitting, at a base station, MBS data to at least one relay located in a cell of the base station over a backhaul link includes grouping relays into at least one multicast group, and multicasting the MBS data to each multicast group.

11. The method of claim 9 or 10, further comprising, when a notification of failure in receiving the MBS data transmitted by the base station is received from the relay or a notification of success in receiving the MBS data is not received from the relay, retransmitting, at the base station, the MBS data failed to be received,

wherein the retransmission is performed by broadcast or unicast.

12. The method of one of claims 7 to 11, wherein transmitting, at a base station, MBS data to at least one relay located in a cell of the base station over a backhaul link includes unicasting, at the base station, the MBS data to each relay.

13. The method of one of claims 7 to 11, wherein transmitting, at a base station, MBS data to at least one relay located in a cell of the base station over a backhaul link includes broadcasting the MBS data to all relays to which the base station needs to transmit the MBS data when a number of the relays to which the base station needs to transmit the MBS data exceeds a predetermined threshold value, and unicasting the MBS data to each relay when the number of relays to which the base station needs to transmit the MBS data is the predetermined threshold value or less,.

14. The method of one of claims 7 to 13, further comprising transmitting control information for resource allocation of the wireless backhaul link related to the MBS data transmission using at least one of a part of radio resources allocated to the backhaul link and a control channel for a macro UE.

15. The method of one of claims 7 to 14, further comprising receiving, at the relay, control information for resource allocation related to the MBS data transmission,
wherein when the relay does not have a self-interference cancellation function, the control information is received through a part of the radio resources allocated to the backhaul link, and
when the relay has the self-interference cancellation function, the control information is received through at least one of a part of the radio resources allocated to the backhaul link and the control channel for a macro UE.

# FIG. 1

SYNCHRONIZED BASE
STATIONS TRANSMITTING
MBMS DATA

SIGNALS FROM DIFFERENT BASE
STATIONS ARRIVE WITHIN CYCLIC
PREFIX AT UE

OFDM SYMBOL DURATION

CYCLIC
PREFIX

ISI-FREE WINDOW

# FIG. 2

# FIG. 3

# FIG. 4

TIME ⟶

MACRO UE CONTROL CHANNEL, ETC.

| BASE STATION -> MACRO UES | 410 |

TRANSITION GAP

BASE STATION -> RELAY 1 — 411

BASE STATION -> RELAY 2

BASE STATION -> RELAY 3

TRANSITION GAP

BASE STATION -> MACRO TERMINALS

TRANSMISSION OF BASE STATION

FREQUENCY

No Rx

No Rx — 420

TRANSITION GAP

BASE STATION -> RELAY 1 — 421

No Rx

No Rx

TRANSITION GAP

No Rx

RECEPTION OF RELAY 1

FREQUENCY

CONTROL CHANNEL FOR RELAY-ACCESSING UES, ETC.

No Tx — 430

TRANSMISSION OF RELAY 1

FREQUENCY

431

# FIG. 5

TIME ────────►

FREQUENCY ─────►

| MACRO UE CONTROL CHANNEL, ETC. | BASE STATION -> MACRO UES | | |
|---|---|---|---|
| | TRANSITION GAP | BASE STATION -> RELAY 1 | TRANSITION GAP |
| | | BASE STATION -> ALL RELAYS (MBSFN DATA) | |
| | | BASE STATION -> RELAY 2 | |
| | BASE STATION -> MACRO UES | | |

─ 510

TRANSMISSION OF BASE STATION

── 511

FREQUENCY ─────►

| No Rx | No Rx | | |
|---|---|---|---|
| | TRANSITION GAP | BASE STATION -> RELAY 1 | TRANSITION GAP |
| | | BASE STATION -> ALL RELAYS (MBSFN DATA) | |
| | | No Rx | |
| | No Rx | | |

─ 520

RECEPTION OF RELAY 1

── 521

# FIG. 6

TIME ⟶

BASE STATION -> MACRO UES — 610

| MACRO UE CONTROL CHANNEL, ETC. | TRANSITION GAP | BASE STATION -> RELAY 1 (UNICAST DATA) | TRANSITION GAP | TRANSMISSION OF BASE STATION |
|---|---|---|---|---|
| | | BASE STATION -> RELAY 1 (MBSFN DATA) | | |
| | | BASE STATION -> RELAY 2 (UNICAST DATA) | | |
| | | BASE STATION -> RELAY 2 (MBSFN DATA) | | |

BASE STATION -> MACRO UES

No Rx — 620

| No Rx | TRANSITION GAP | BASE STATION -> RELAY 1 (UNICAST DATA) | TRANSITION GAP | RECEPTION OF RELAY 1 |
|---|---|---|---|---|
| | | BASE STATION -> RELAY 1 (MBSFN DATA) | | |
| | | No Rx | | |

No Rx

FREQUENCY ⟶

FREQUENCY ⟶

# FIG. 7

TIME ⟶

FREQUENCY

| MACRO UE CONTROL CHANNEL, ETC. | BASE STATION -> MACRO UES | 710 |
| | BASE STATION -> RELAY 1 | |
| | BASE STATION -> RELAY 2 | TRANSMISSION OF BASE STATION |
| | BASE STATION -> RELAY 3 | |
| | BASE STATION -> MACRO UES | |

FREQUENCY

| MACRO UE CONTROL CHANNEL, ETC. | No Rx | 720 |
| | BASE STATION -> RELAY 1 | |
| | No Rx | RECEPTION OF RELAY 1 |
| | No Rx | |
| | No Rx | |

721

FREQUENCY

| CONTROL CHANNEL FOR RELAY-ACCESSING UES, ETC. | RELAY -> RELAY UES | 730 TRANSMISSION OF RELAY 1 |

731

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200928753

- KR 200941228